# EUROPEAN PATENT SPECIFICATION

(11) **EP 2 302 427 B1**
(45) Date of publication and mention of the grant of the patent: **18.06.2014**
(21) Application number: 09170762.0
(22) Date of filing: 18.09.2009
(51) Int. Cl.: F21V 8/00

(54) **Illumination system**
Beleuchtungssystem
Système d'illumination

(43) Date of publication of application: 30.03.2011
(73) Proprietor: 3M Innovative Properties Company, Saint Paul, MN 55133-3427 (US)
(72) Inventor: Rudek, David, 41453 Neuss (DE); Schmuck, Eric, 41453 Neuss (DE)
(74) Representative: Fiesser, Gerold Michael

(56) References cited:
- WO-A1-2004/038469
- WO-A1-2009/134572
- WO-A1-2009/134573
- DE-A1- 10 004 613
- DE-A1- 10 259 623
- DE-C- 746 160

## Description

The present invention relates to an illumination system, in particular, an illumination system comprising an optical element, such as an optical fibre.

Optical elements, such as optical fibres and optical films, can be used in a variety of both functional and decorative lighting applications. Lighting used to highlight an object or area to increase conspicuousness can be considered to be functional in nature, whereas lighting used purely for aesthetic reasons can be considered to be decorative in nature.

Illumination of optical fibres and optical films is typically provided by at least one light source, such as a light emitting diode (LED). Generally optical fibres comprise a core and a cladding layer, with total internal reflection occurring at the boundary or interface between the core and the cladding layer. Light emitted from the light source is transmitted along the length of the fibre by means of this total internal reflection, and so may be viewed from an exposed end of the optical fibre. Alternatively, light may be viewed along the length of the optical fibre if means are provided to either change the angle of internal reflection to below the critical angle, such that light is emitted laterally to the optical fibre, or to maximise or reinforce the amount of light emitted from a fibre where a portion of the light transmitted along the length of the fibre is already visible. Such fibres emit light along their length due to imperfections within the fibre, for example in either the core or the cladding layer, or because the core/cladding interface contains imperfections. Viewing light along the length of the fibre may be achieved in a number of ways, depending on the lighting effect required.

For example, EP 0 594 089 discloses the use of a plurality of notches cut into the outer surface of an optical fibre exhibiting total internal reflection along at least a portion of its length to create additional reflecting surfaces. Light striking each of these reflecting surfaces is reflected out of the optical fibre, creating a light emission point. Typically, the reflecting surfaces have a cross-sectional area which is smaller than the cross-sectional area of the fibre in which the notch forming the surface is made. Suitable notches include "V"-shaped and undercut notches, as well as notches having a quarter cylindrical shape. The notches may be cut in the surface of the fibre so as to be perpendicular to an axis running centrally along the length of the fibre, or so as to be inclined at an angle to such an axis. A single row of notches may be provided, or, as discussed in WO98/33008, two rows of notches may overlap, giving a pattern where adjacent notches are offset from each other. Each notch produces illumination corresponding to the size and position of the notch itself.

An alternative approach is to use a fibre where a portion of the light transmitted along its length is already visible, and to combine the fibre with, for example, a diffuse reflecting surface, as disclosed in WO99/22174. Suitable diffuse reflecting surfaces include sheet materials, such as microvoided and mircoporous sheet materials, that can be wrapped around a portion of the circumference of an optical fibre along at least part of its visible length. Using a diffuse reflecting surface creates a soft lighting effect, with relatively uniform illumination along the length of the optical fibre in contact with the sheet material.

Rather than using an optical fibre, which traditionally has a circular cross-section, an optical element comprising an optical film having a microstructured surface can also be used to create a diffuse, soft lighting effect, as described in US2005/0151119. Alternatively, an element comprising an optical film having a number of grooves or notches along its surface can be used to provide similar illumination effects to those of notched optical fibres.

Once the type of illumination has been decided upon, it is also necessary to be able to mount the optical element in a position to illuminate an object or area. One common situation is where it is desired to use the optical element as a hidden light source, such that illumination is cast onto a particular region without the light source being visible. An example of this is where vehicle interiors, such as doors, dashboards and visible equipment, are illuminated when either the vehicle headlights are switched on or initially when the vehicle is unlocked. To provide such illumination it is important to be able to position the optical element securely within the vehicle trim or component, such that there is no movement of the optical element throughout the lifetime of the vehicle, even in severe conditions, such as driving along an extremely rough road surface. In addition, when the optical element is provided with light emission regions that require a specific orientation of the optical element in order for the light to be visible, it is also necessary to secure the optical element in a fixed orientation relative to any housing it is mounted in.

The problem of positioning, orientation and retention of an optical element is considered in WO2008/022007. This document proposes a number of physical modifications to an optical fibre to create an optical element with an engineered cross-section to ensure that it remains in a fixed orientation within a housing. For example, the optical fibre may be provided with protrusions, positioned on each end of a chord crossing the circular cross-section of the optical fibre. These protrusions engage with an overhang portion provided in the housing, and with the interior walls of the housing, such that the optical fibre cannot fall out of the housing or rotate within the housing. Alternatively, the optical fibre can be shaped to engage with a housing having a co-operating shape, for example, the optical fibre may be provided with cut-out regions, a trapezoidal cross-section or an extension that sits outside of the housing. Whilst these designs offer a good solution to the problems of fixed position, orientation and retention, each requires the structure of the optical fibre to be altered, and in some cases, a complex die or mould system will be needed to form the desired optical fibre shape.

Documents DE 746 160 C and DE 100 04 613 A1 disclose a ring light guide used in an illumination system.
Document DE 102 59 623 A1 discloses an optical element that has been stretched.
Document WO 2004/038469 A1 discloses an optical element held into a housing.
Document WO 2009/134572 A1 discloses a ring light guide held within a housing.

It is therefore desirable to be able to install an optical element, in particular an optical fibre, within a housing, such that the optical fibre is secure and preferentially oriented, and to have freedom in design in the shape of the housing creating a wide variety of lighting applications.

The present invention aims to address these problems by providing an illumination system, comprising: at least one light source; an optical element configured to emit visible light from a series of emission points located along its length when coupled to the light source, each end of the optical element and the light source being held within a sleeve such that the optical element forms a continuous light guide; and wherein the optical element is further adapted to fit within a housing and to be held in tension within that housing, such that the optical element sits within the housing in a preferred orientation.

By keeping the optical element in tension any rotation whilst positioned within a housing is resisted. This ensures that the optical element comes to rest within the housing in a preferred orientation such that any light emitted is directed in a desired pattern. Although the cross-section of a conventional optical element may be altered, there is no need to create a specific optical element with an engineered cross-section, as with the prior art.

Preferably, the optical element has a non-stretched length and a stretched length, and wherein the optical element is in tension as it is held in its stretched length. More preferably, the optical element has a stretched length of greater than 100% but less then or equal to 110%.

Preferably, the optical element has a generally circular cross-section. More preferably, the optical element has a bevelled edge positioned at a chord of the circular cross-section. The bevelled edge may cause the optical element to come to rest in the preferred orientation.

The bevelled edge of the optical element may be adapted to contact an inner face of a channel-shaped housing, where the outer faces of the channel-shaped housing form the perimeter of an object to be illuminated. Alternatively, a non-bevelled surface of the optical element may be adapted to contact an inner face of a channel-shaped housing, where the outer faces of the channel-shaped housing form the perimeter of an object to be illuminated.

Preferably, the optical element is provided with a plurality of notches positioned regularly along its length creating the series of emission points. The optical element may be provided with a roughened surface.

Preferably, the sleeve is formed from a light-diffusing material.

The illumination system may comprise two light sources, one coupled to each end of the optical element. The optical element may be an optical fibre.

The continuous light guide is preferably a ring light guide.

The invention also provides an illuminable article comprising: an illumination system as above, and a housing adapted to receive an optical element forming part of the illumination system.

Preferably, the housing is channel-shaped. More preferably, the housing is in the form of a square-shaped channel, having three sides.

The invention will now be described by way of example only, and with reference to the accompanying drawings, in which:
Figure 1 is a diagrammatic longitudinal cross-section of a known optical fibre comprising light emission points along its length;
Figure 2 is a diagrammatic perspective view of a ring light guide comprising an illumination system in accordance with the present invention;
Figure 3 is a diagrammatic cross-sectional view of an illumination system in accordance with the present invention *in situ* within a circular housing;
Figure 4a is a first diagrammatic sectional view of an optical fibre suitable for use in the illumination system of the present invention; and
Figure 4b is a second diagrammatic sectional view of an optical fibre suitable for use in the illumination system of the present invention.

The present invention offers an alternative approach to the prior art in that rather than altering the structure of an optical element, such as an optical fibre, to ensure that the element remains in a fixed position and orientation within a housing, the properties of the material of the optical element are exploited instead.

Optical fibres generally comprise a core and a cladding layer, where light is transmitted along the core, and the cladding layer is provided to give protection from damage to the core layer. Typically, both the core and cladding layer are formed from glass, or both from a plastics material. Alternatively, optical fibres may only a single layer, formed from a plastics material, rather than the two-layer core and cladding structure. Glass optical fibres tend to comprise a Germania-doped silica glass core, and although give excellent transmission properties, such fibres require special handling and installation, adding to their overall cost. Increasingly, optical fibres are formed from plastics materials as the mechanical flexibility of the fibre compared with glass materials is greatly increased, and the cost is considerably lower. Plastic optical fibres may typically comprise a PMMA (polymethylmethacrylate) or polystyrene core with a silicone resin cladding layer. Fibres without cladding are preferred, but those with cladding are just as suitable for carrying out the invention. In addition to their increased mechanical flexibility, plastic optical fibres can be exploited by the present invention as their materials properties include elasticity. Suitable fibres include polyurethane materials, such as a two-component or thermoplastic polyurethane, or a silicone material.

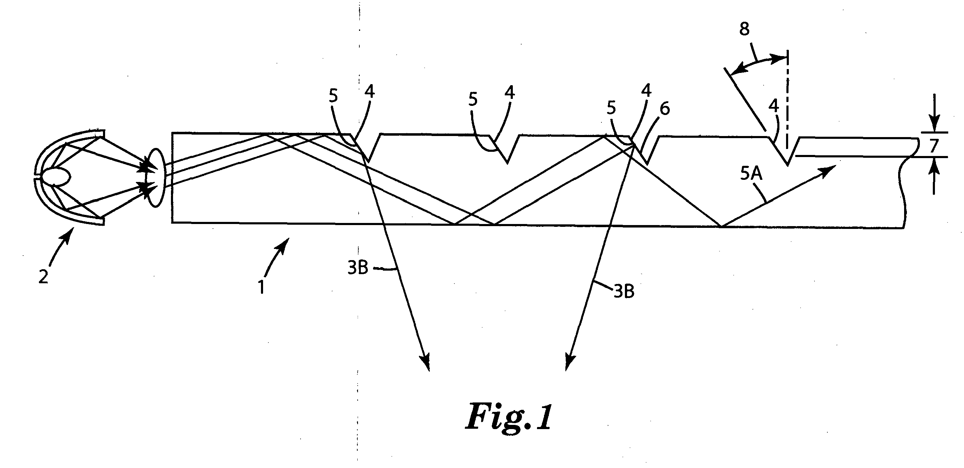

Figure 1 is a diagrammatic longitudinal cross-section of a known optical fibre comprising light emission points along its length. As discussed above, the optical fibre 1 comprises a plastics material, and illumination of the fibre 1 is provided by a light source 2, such as an LED arranged with a parabolic reflector, with light focussed into the optical fibre 1 by means of a lens. A proportion of the light rays 3A emitted by the light source 2 propagate along the length of the optical fibre 1, which is the means by which information is carried down the optical fibre 1. A proportion of the light rays 3B emitted by the light source will exit the optical fibre 1, as described below.

Light emission points are provided at regular intervals along the length of the optical fibre 1. Such light emission points may be provided along the entire length of the optical fibre 1, or only along a portion of the length of the optical fibre 1. Each emission point is created by a "V"-shaped notch 4 cut into the surface of the optical fibre 1, aligned in a single row parallel with an axis running along the centre of the optical fibre. Each notch 4 has optically smooth surfaces 5, one of which is provided with a reflective coating 6 to aid in reflecting a proportion of the light rays 3B out of the optical fibre 1. Each notch 4 is cut to a particular depth 7, which impinges on the central region of the optical fibre 1. This creates a reflection surface within the optical fibre 1 that is not at the critical angle for total internal reflection, and therefore allows light rays 3B to be reflected out of the optical fibre 1 from the surface opposite to the notch 4, creating the light emission point. The proportion of the light rays 3B reflected out of the optical fibre 1 is determined by the angle 8 to the vertical at which each sloping surface of the "V"-shaped notch 4 lies.

Consequently the choice of notch depth and angle, density of notches 4 provided and their position along the length of the optical fibre 1 determines the amount of light emitted along the length of the optical fibre 1. This is discussed in more detail, including the effect of notch design, in EP 0 594 089 B1, to which reference should be made.

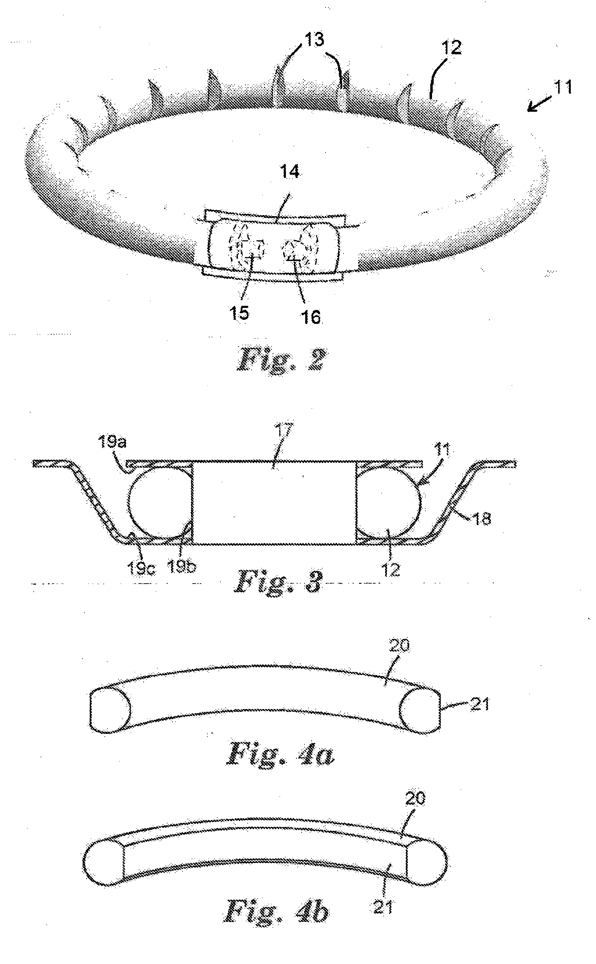

Figure 2 is a diagrammatic perspective view of a ring light guide comprising an illumination system in accordance with the present invention. The continuous light guide is in the form of a ring light guide 11, and comprises an optical fibre 12, for example, a notched optical fibre 1 as illustrated in Figure 1, which is configured to emit light from a series of notches 13 that create emission points along at least a portion of its length, when coupled with a light source. The optical fibre 12 is held in a ring by means of a sleeve 14 which is adapted and dimensioned to receive the ends of the optical fibre 12. Two light sources 15, 16 are provided, each positioned in the sleeve 14 so as to enable the light emitted to be coupled optically with an end of the optical fibre. In order to ensure that the emission points lie in a preferred orientation when ring light guide 11 is in use, the optical fibre material is stretched such that it remains in tension when positioned within a housing, and the optical fibre 12 exerts a pull force within the sleeve 14 as it tries to relax back to its original length and out of its state of tension. The material forming the sleeve 14 has elastic properties, and is stretched over the ends of the optical fibre 12. As the material tries to relax, it grips the optical fibre 12 tightly, holding it firmly in position.

Once in tension and within the housing, the optical fibre 12 sits securely in a preferred orientation as any rotation of the optical fibre 12 within the housing is effectively prevented by the state of tension in which the optical fibre 12 is held. The stretched length of the optical fibre 12 when in tension is in the range of approximately 105% to 110% of the original length (measured as 100%), where optical fibres of a plastics material have a stretched length of approximately 105% and those of a silicone material have a stretched length of approximately 110%. Consequently, it is desirable that an optical element, such as an optical fibre, used in the present invention has a non-stretched length and a stretched length, and that the stretched length is great than 100% and less then or equal to 110% of the non-stretched length. When creating the tensile effect it is preferable to join the ends of the optical fibre 12 by insertion into the sleeve 14 in the original non-stretched state, and stretch the optical fibre 12 over the circular housing 17, the circumference of which is greater than the length of the optical fibre 12, to stretch the optical fibre 12 and ensure that it remains in tension. Alternatively, the optical fibre 12 may be stretched before insertion into the sleeve 14, for example by placing the optical fibre 12 within the circular housing 17 and then inserting the ends of the optical fibre 12 into the sleeve 14 once the optical fibre 12 is in the correct position.

Regardless of how the optical fibre 12 is put into tension, only a slight difference in circumference/length is required to provide sufficient tension within the optical fibre 12 to ensure a preferred orientation and secure positioning is achieved. Too great a stretch of the optical fibre 12 induces a higher tensile force that may damage the optical fibre 12 during repeated thermal cycling as the light sources 15, 16 are turned on and off, and during variations in ambient conditions, particularly if installed in a vehicle, which may experience temperatures typically in the range -15°C to + 35°C.

The circular housing 17 also plays a role in ensuring that the optical fibre 12 remains in tension and therefore in a preferred orientation, as illustrated in Figure 3. Figure 3 is a diagrammatic cross-sectional view of an illumination system in accordance with the present invention *in situ* within a circular housing. The ring light guide 11 formed using an illumination system in accordance with the present invention has many applications in both functional and decorative lighting uses. In each case, the ring light guide 11 is positioned within a circular housing 17. The circular housing 17 is generally channel shaped, in particular, having a square-channel cross-section, and is provided with an extension 18 to the third of the three walls 19a, 19b, 19c forming the channel. The exterior of the circular housing 17 forms the perimeter of an object to be illuminated. As the optical fibre 12 is held in tension it exerts a compressive force against the inner wall 19b of the circular housing forming the base of the square cross-section channel. This is in addition to the pull force within the sleeve 14 into which the ends of the optical fibre 12 are inserted. This is due to the optical fibre 12 trying to relax back to its original length after stretching, and out of its state of tension. To facilitate the illumination of an object that the circular housing 17 surrounds, the extension 18 to the third wall 19c of the channel is either highly polished on its inner surface, or coated with a reflective material to give a sharp reflection, or provided with a roughened surface to give a more diffuse reflection. This ensures that a major proportion of the light emitted by the emission points on the optical fibre 12 is viewed around the housing, whilst the actual optical fibre 12 remains hidden from view.

Although the preferred orientation of a conventional generally circular cross-section optical fibre 12 can be assured by inducing tension within the optical fibre 12 when used in a ring light guide 11, it is possible to improve the contact between the optical fibre 12 and the circular housing 17 by making a small modification to the cross-section of the optical fibre 12. Figure 4a is a first diagrammatic sectional view of an optical fibre suitable for use in the illumination system of the present invention showing an outer surface of the optical fibre and Figure 4b is a second diagrammatic sectional view of an optical fibre suitable for use in the illumination system of the present invention showing an inner surface of the optical fibre. The optical fibre 20 illustrated in Figured 4a and 4b has had its original generally circular cross-section altered by the provision of a bevelled edge 21 positioned at a chord of the circular cross-section. When the optical fibre 12 is stretched and the ends inserted into the sleeve 14, the bevelled edge 21 can be positioned either on the inner side of the ring light guide or on the outer side of the ring light guide. If positioned on the inner side, the bevelled edge 21 causes the optical fibre 12 to come to rest in the preferred orientation, with the bevelled edge 21 being adapted to contact the inner surface 19b of the circular housing 17 forming the base of the square-shaped channel. If positioned on the outer side, the bevelled edge 21 causes an increase in the tension within the optical fibre (as a rounded surface forms the inner side of the ring light guide), and a non-bevelled surface of the optical fibre 12 is therefore adapted to contact an inner face 19a, 19b, 19c of the circular housing 17. In each situation, the addition of the bevelled edge 21 gives additional control of the orientation of the optical fibre, and ensures that it is retained securely within the circular housing 17.

Although the above example is concerned with optical fibres, other optical elements, such as optical films (for example, those disclosed in US2005/0151119) may be used to form an illumination system in accordance with the present invention. As an alternative to using an optical fibre or other optical element with light emission points provided along at least a portion of its length, the surface of the optical fibre/element may be roughened, for example, by having a microstructured surface, giving a soft lighting effect to the ring light guide. The optical fibre may be provided with a reflective coating on each of the notches, as described above, or this coating may be omitted, if desired. This may be preferable in some applications.

To aid in giving the effect of a continuous ring of light, the sleeve in which the ends of the optical fibre 12 are inserted may be formed from a light diffusing material. This ensures that localised hot spots caused by the light sources are disguised, so that the join between the ends of the optical fibre is virtually invisible. The material may be a thermoplastic material, such as ABS (acrylonitrile butadiene styrene), which may be transparent with a roughened surface, opaque (for example, a milky-white colour) or polished to reflect external ambient light. The material may be cast or injection moulded, for example, a cast sleeve could be pre-formed and used to join the ends of the optical fibre 12 before stretching over a housing; an injection moulded sleeve could be pre-formed or formed *in situ,* as required. The optical fibre 12 may be held within the sleeve 14 by a number of other means than that described above, for example, the sleeve 14 may clamp the ends of the optical fibre 12 in place by mechanical means, such as a ring or clip placed around the outside of the sleeve 14, or an interlock via a groove placed on the optical fibre 12 and a corresponding protrusion positioned on the sleeve 14 or vice versa, or an adhesive may be used.

Although in the above description, a ring light guide (a light guide formed in the shape of a circle) is described as an example of a continuous light guide, other shapes may be formed. For example, the continuous light guide may be in the form of an ellipse, a square, a rectangle, a triangle or other geometrical shapes, all of which have in common that they are closed, that is, both ends of the optical fibre forming the shape are enclosed within the housing, creating a continuous close perimeter. In this situation the circular housing 17 described above will take on the same geometrical shape as the continuous light guide, either around its entire closed perimeter or around at least a portion of its entire closed perimeter.

Each of these geometrical shaped housings may have the same channel-shaped form as the circular housing described above, that is, a square-shaped channel having 3 walls. Alternatively, the housing may have other, substantially channel-shaped forms, such as having two walls, with the optical fibre resting in a preferred orientation against one or both of these walls. As a further alternative, the housing could be formed from a substantially or completely closed channel (and therefore may comprise more than one part), with at least one of the walls of the housing being transparent to the wavelength emitted by the light source 15, 16. Extending this to the above example, the extension 18 to the third wall 19c of the circular housing 17 could be angled to substantially cover the square-shaped channel of the circular housing 17, and formed from a transparent plastic material.

The housing is preferably formed from a plastics material, for example, a thermoplastic material, such as ABS (acrylonitrile butadiene styrene) or PP (polypropylene). If a reflective surface is provided on at least one face of the housing it is desirable to use a thin film aluminium coating to create the reflective surface. Typically the housing will be a colour selected to match the surroundings of the light guide, but at least one wall of the housing may be transparent to the wavelength of the light emitted by the light sources 15, 16.

Whilst the use of two light sources is preferable, it may be desirable to use a single light source, depending on the length of the optical fibre and the brightness of the lighting effect required. Ideally the light source(s) are light emitting diodes (LEDs), powered by an external power source, such as a battery, and connected to the power source by either a flexible or rigid electrical connector, as appropriate. LEDs operating at a current in the range 10 - 20mA are suitable, for example, a white LED operating at 3.4V and 20mA gives a soft white ambient light, a yellow LED would operate at a lower voltage, for example 2.0V. Other colour LEDs or even multicoloured LEDs may be used instead. If LEDs with an operating current of more than 100mA are used, additional heat soak measures must be taken to prevent the illumination system from overheating.

An illumination system in accordance with the present invention is particularly suitable for automotive applications, such as illumination of dials, dashboard instruments, door furniture, cup holders and loudspeakers, and would include light emitting diodes in electrical connection with a 12V vehicle battery. When used in such automotive applications, it is preferable that the optical fibre has a maximum diameter in the range 2 to 12mm, with 4 to 5mm being a typical fibre diameter used in loudspeaker illumination. Other applications may require the use of LEDs with a higher power output and optical fibres of a different width, and may include, for example, interior and exterior building lighting (shops, offices and domestic use) and other transport applications, such as trains, boats and aircraft.

## Claims

1. An illumination system, comprising:
a housing;
at least one light source (15, 16);
an optical element (12) configured to emit visible light from a series of emission (13) points located along its length when coupled to the light source (15, 16), each end of the optical element (12) and the light source (15, 16) being held within a sleeve (14) such that the optical element forms a ring light guide (11); and
wherein the optical element (12) fits within the housing (17) and is stretched such that it remains in tension within that housing (17), such that the optical element (12) sits within the housing (17) in a preferred orientation.

2. The illumination system of claim 1, wherein the optical element (12) has a length in a stretched state of greater than 100% but less then or equal to 110% of a non-stretched state.

3. The illumination system of any preceding claim, wherein the optical element (12) has a generally circular cross-section.

4. The illumination system of claim 3, wherein the optical element (12) has a bevelled edge positioned at a chord of the circular cross-section.

5. The illumination system of claim 4, wherein the bevelled edge causes the optical element (12) to come to rest in the preferred orientation.

6. The illumination system of claim 5, wherein the bevelled edge of the optical element (12) is adapted to contact an inner face of a channel-shaped housing (17), where the outer faces of the channel-shaped housing (17) form the perimeter of an object to be illuminated.

7. The illumination system of claim 5, wherein a non-bevelled surface of the optical element (12) is adapted to contact an inner face of a channel-shaped housing (17), where the outer faces of the channel-shaped housing (17) form the perimeter of an object to be illuminated.

8. The illumination system of any preceding claim, wherein the optical element (12) is provided with a plurality of notches positioned regularly along its length creating the series of emission points (13).

9. The illumination system of any preceding claim, wherein the optical element (12) is provided with a roughened surface.

10. The illumination system of any preceding claim, wherein the sleeve (14) is formed from a light-diffusing material.

11. The illumination system of any preceding claim, comprising two light sources (15, 16), one coupled to each end of the optical element (12).

12. The illumination system of any preceding claim, wherein the optical element (12) is an optical fibre.

13. Illuminable article comprising:
an illumination system according to any of claims 1 to 12,
a housing (17) adapted to receive an optical element (12) forming part of the illumination system.

14. Article according to claim 13, wherein the housing (17) is channel-shaped.

15. Article according to claim 14, wherein the housing (17) is in the form of a square-shaped channel.

## Patentansprüche

1. Beleuchtungssystem, das Folgendes umfasst:
ein Gehäuse;
mindestens eine Lichtquelle (15, 16);
ein optisches Element (12), das dafür konfiguriert ist, sichtbares Licht von einer Reihe von Aussendepunkten (13), die entlang seiner Länge angeordnet sind, auszusenden, wenn es mit der Lichtquelle (15, 16) gekoppelt wird, wobei jedes Ende des optischen Elements (12) und der Lichtquelle (15, 16) in einer Hülse (14) dergestalt gehalten wird, dass das optische Element einen Ringlichtwellenleiter (11) bildet; und
wobei das optische Element (12) in das Gehäuse (17) passt und so gereckt ist, dass es innerhalb des Gehäuses (17) in Spannung bleibt, dergestalt, dass das optische Element (12) in einer bevorzugten Ausrichtung in dem Gehäuse (17) sitzt.

2. Beleuchtungssystem nach Anspruch 1, wobei das optische Element (12) in einem gereckten Zustand eine Länge von mehr als 100 % hat, aber nicht mehr als oder gleich 110 % eines nichtgereckten Zustands.

3. Beleuchtungssystem nach einem der vorangehenden Ansprüche, wobei das optische Element (12) einen allgemein kreisförmigen Querschnitt hat.

4. Beleuchtungssystem nach Anspruch 3, wobei das optische Element (12) eine gefaste Kante aufweist, die an einer Sehne des kreisförmigen Querschnitts positioniert ist.

5. Beleuchtungssystem nach Anspruch 4, wobei die gefaste Kante bewirkt, dass das optische Element (12) in der bevorzugten Ausrichtung ruht.

6. Beleuchtungssystem nach Anspruch 5, wobei die gefaste Kante des optischen Elements (12) dafür ausgelegt ist, eine Innenfläche eines kanalförmigen Gehäuses (17) zu berühren, wo die Außenflächen des kanalförmigen Gehäuses (17) den Umfangsrand eines zu beleuchtenden Objekts bilden.

7. Beleuchtungssystem nach Anspruch 5, wobei eine nicht gefaste Fläche des optischen Elements (12) dafür ausgelegt ist, eine Innenfläche eines kanalförmigen Gehäuses (17) zu berühren, wo die Außenflächen des kanalförmigen Gehäuses (17) den Umfangsrand eines zu beleuchtenden Objekts bilden.

8. Beleuchtungssystem nach einem der vorangehenden Ansprüche, wobei das optische Element (12) mit mehreren Auskerbungen versehen ist, die in regelmäßigen Abständen entlang seiner Länge angeordnet sind und die die Reihe von Aussendepunkten (13) bilden.

9. Beleuchtungssystem nach einem der vorangehenden Ansprüche, wobei das optische Element (12) mit einer aufgerauten Oberfläche versehen ist.

10. Beleuchtungssystem nach einem der vorangehenden Ansprüche, wobei die Hülse (14) aus einem lichtstreuenden Material besteht.

11. Beleuchtungssystem nach einem der vorangehenden Ansprüche, das zwei Lichtquellen (15, 16) umfasst, wobei eine an jedes Ende des optischen Elements (12) gekoppelt ist.

12. Beleuchtungssystem nach einem der vorangehenden Ansprüche, wobei das optische Element (12) eine optische Faser ist.

13. Beleuchtbarer Gegenstand, der Folgendes umfasst:
ein Beleuchtungssystem nach einem der Ansprüche 1 bis 12,
ein Gehäuse (17), das dafür ausgelegt ist, ein optisches Element (12) aufzunehmen, das einen Teil des Beleuchtungssystems bildet.

14. Gegenstand nach Anspruch 13, wobei das Gehäuse (17) kanalförmig ist.

15. Gegenstand nach Anspruch 14, wobei das Gehäuse (17) die Form eines quadratischen Kanals hat.

## Revendications

1. Système d'éclairage, comprenant :
un boîtier ;
au moins une source de lumière (15, 16) ;
un élément optique (12) configuré pour émettre une lumière visible à partir d'une série de points d'émission (13) situés sur sa longueur lorsqu'il est couplé à la source de lumière (15, 16), chaque extrémité de l'élément optique (12) et de la source de lumière (15, 16) étant maintenue à l'intérieur d'un manchon (14) de telle sorte que l'élément optique forme un guide de lumière annulaire (11) ; et
dans lequel l'élément optique (12) s'ajuste à l'intérieur du boîtier (17) et est étiré de telle sorte qu'il reste en tension à l'intérieur de ce boîtier (17), de sorte que l'élément optique (12) repose à l'intérieur du boîtier (17) dans une orientation préférée.

2. Système d'éclairage selon la revendication 1, dans lequel l'élément optique (12) a une longueur dans un état étiré supérieure à 100 %, mais inférieure ou égale à 110 % de celle dans un état non étiré.

3. Système d'éclairage selon l'une quelconque des revendications précédentes, dans lequel l'élément optique (12) a une section transversale généralement circulaire.

4. Système d'éclairage selon la revendication 3, dans lequel l'élément optique (12) a un bord biseauté positionné au niveau d'une corde de la section transversale circulaire.

5. Système d'éclairage selon la revendication 4, dans lequel le bord biseauté oblige l'élément optique (12) à rester dans l'orientation préférée.

6. Système d'éclairage selon la revendication 5, dans lequel le bord biseauté de l'élément optique (12) est adapté pour toucher une face interne d'un boîtier en forme de canal (17), les faces externes du boîtier en forme de canal (17) formant le périmètre d'un objet à éclairer.

7. Système d'éclairage selon la revendication 5, dans lequel une surface non biseautée de l'élément optique (12) est adaptée pour toucher une face interne d'un boîtier en forme de canal (17), les faces externes du boîtier en forme de canal (17) formant le périmètre d'un objet à éclairer.

8. Système d'éclairage selon l'une quelconque des revendications précédentes, dans lequel l'élément optique (12) est pourvu d'une pluralité d'entailles positionnées de façon régulière sur sa longueur, créant la série de points d'émission (13).

9. Système d'éclairage selon l'une quelconque des revendications précédentes, dans lequel l'élément optique (12) est pourvu d'une surface rugosifiée.

10. Système d'éclairage selon l'une quelconque des revendications précédentes, dans lequel le manchon (14) est formé à partir d'un matériau diffusant la lumière.

11. Système d'éclairage selon l'une quelconque des revendications précédentes, comprenant deux sources de lumière (15, 16), une couplée à chaque extrémité de l'élément optique (12).

12. Système d'éclairage selon l'une quelconque des revendications précédentes, dans lequel l'élément optique (12) est une fibre optique.

13. Article éclairable comprenant :
un système d'éclairage selon l'une quelconque des revendications 1 à 12,
un boîtier (17) adapté pour recevoir un élément optique (12) faisant partie du système d'éclairage.

14. Article selon la revendication 13, dans lequel le boîtier (17) est en forme de canal.

15. Article selon la revendication 14, dans lequel le boîtier (17) se présente sous la forme d'un canal de forme carrée.
